# EUROPÄISCHE PATENTSCHRIFT

(11) **EP 1 032 808 B1**
(45) Veröffentlichungstag und Bekanntmachung des Hinweises auf die Patenterteilung: **02.11.2005**
(21) Anmeldenummer: 98962379.8
(22) Anmeldetag: 20.11.1998
(51) Int. Cl.: G01G 11/08

(54) **GRAVIMETRISCHE DOSIERVORRICHTUNG FÜR SCHÜTTGÜTER**
GRAVIMETRIC DOSING DEVICE FOR BULK MATERIALS
DISPOSITIF DE DOSAGE GRAVIMETRIQUE POUR MATERIAUX EN VRAC

(30) Priorität: 22.11.1997 DE 19751732
(43) Veröffentlichungstag der Anmeldung: 06.09.2000
(73) Patentinhaber: Pfister GmbH, 86165 Augsburg (DE)
(72) Erfinder: HÄFNER, Hans, Wilhelm, D-86551 Aichach (DE)
(74) Vertreter: Fiener, Josef
(86) Internationale Anmeldenummer: PCT/EP1998/007489
(87) Internationale Veröffentlichungsnummer: WO 1999/027331

(56) Entgegenhaltungen:
- EP-A- 0 292 723
- EP-A- 0 530 797
- EP-A- 0 644 405
- DE-C- 746 388
- DE-C- 19 504 992
- HAEFNER H W ET AL: "DOSIERROTORWAAGEN - DIE UNIVERSELLE LOESUNG" WAGEN UND DOSIEREN, Bd. 27, Nr. 6, November 1996, Seiten 26-34, XP000640440

## Beschreibung

Die Erfindung betrifft eine gravimetrische Dosiervorrichtung für Schüttgüter gemäß dem Oberbegriff des Patentanspruches 1.

Aus der DE-C-32 17 406 ist eine Vorrichtung zum kontinuierlichen gravimetrischen Dosieren von schüttfähigem Gut bekannt, das über eine Aufgabeöffnung in Taschen eines um eine vertikale Achse drehbaren Rotors geleitet und an einer zur Aufgabeöffnung in Drehrichtung des Rotors versetzten Entleerungsöffnung pneumatisch ausgetragen wird. Das Gehäuse des Rotors ist schwenkbar um eine im wesentlichen horizontale Achse gelagert und mit einer entfernt von dieser Achse angeordneten Kraftmeßvorrichtung verbunden, wobei an der Aufgabeöffnung und der Entleerungsöffnung je ein elastisches Anschlußglied vorgesehen ist. Die horizontale Achse verläuft dabei durch die Mitten der elastischen Anschlußglieder, so daß Kräfte, die bei der Belastung der Dosiervorrichtung auftreten, kompensiert werden können.

Mit einer derartigen Dosiervorrichtung läßt sich eine verhältnismäßig hohe Genauigkeit erzielen, sie ist jedoch relativ bauaufwendig. Zudem kann es bei Schüttgut mit hoher Feuchtigkeit oder bei klebrigem Schüttgut zu Brückenbildungen in den Taschen des Rotors kommen, was unter ungünstigen Bedingungen zu einer unzureichenden Austragung des Schüttguts und damit zu Verfälschungen der Meßwerte führen kann.

Zur Behebung dieses Nachteiles wurde in der gattungsbildenden EP-A-0 530 797 bereits vorgeschlagen, daß der Rotor als Meßteller ausgebildet ist, der in mehrere unabhängig voneinander geringfügig vertikal bewegbare, gleich große Sektoren unterteilt ist. Die Kraftmeßvorrichtung ist dabei unterhalb der Sektoren angeordnet und bestimmt die Masse des auf jeweils einem Sektor befindlichen Gutes beim Vorbeilauf eines Sektors.

Diese Dosiervorrichtung hat sich grundsätzlich bewährt, jedoch weist sie aufgrund des etwa diametralen Versatzes zwischen Beschickungsstation und Entleerungsstation einen relativ großen Durchmesser auf. Dadurch kann die Installation bei eng aneinanderstehenden Schüttgutbunkern schwierig sein oder zusätzlichen Bauaufwand verursachen.

Demzufolge liegt der Erfindung die Aufgabe zugrunde, eine gravimetrische Dosiervorrichtung mit besonders einfachem Aufbau und geringem Platzbedarf anzugeben.

Diese Aufgabe wird erfindungsgemäß gelöst mit einer gravimetrischen Dosiervorrichtung mit den Merkmalen des Anspruchs 1.

Durch die Ausbildung der Meßstrecke als Meßtellerring mit zentraler Schüttgutzuführung läßt sich die Dosiervorrichtung bei ausgezeichneter Kompaktheit besonders einfach unter Schüttgutbehältern installieren.

Bevorzugte Weiterbildungen der erfindungsgemäßen gravimetrischen Dosiervorrichtung sind in den Unteransprüchen gekennzeichnet.

Weitere Merkmale und Vorteile der erfindungsgemäßen Vorrichtung ergeben sich aus der nachfolgenden Beschreibung von Ausführungsbeispielen anhand der Zeichnungen. Es zeigen:
- Fig. 1: eine schematische Seitenansicht eines ersten Ausführungsbeispiels der erfindungsgemäßen Dosiervorrichtung;
- Fig. 2: eine Draufsicht auf die Vorrichtung nach Fig. 1 entlang der Schnittlinie A-A;
- Fig. 3: die Vorrichtung nach Fig. 1 in vergrößerter Teil-Darstellung; und
- Fig. 4: eine abgewandelte Ausführung mit kinematischer Umkehrung der relativ zueinander bewegten Bauteile.

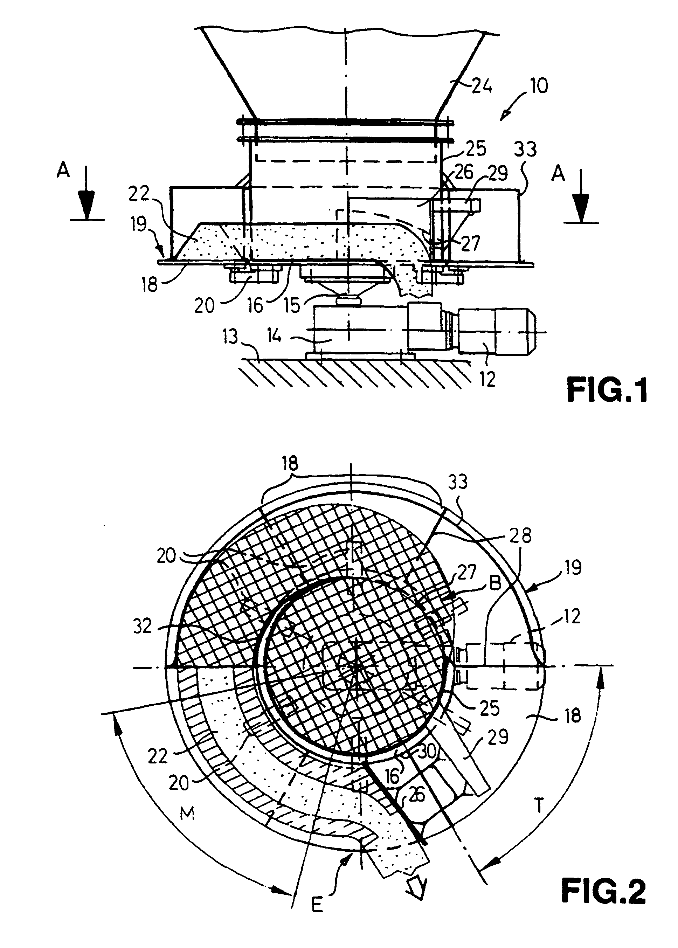

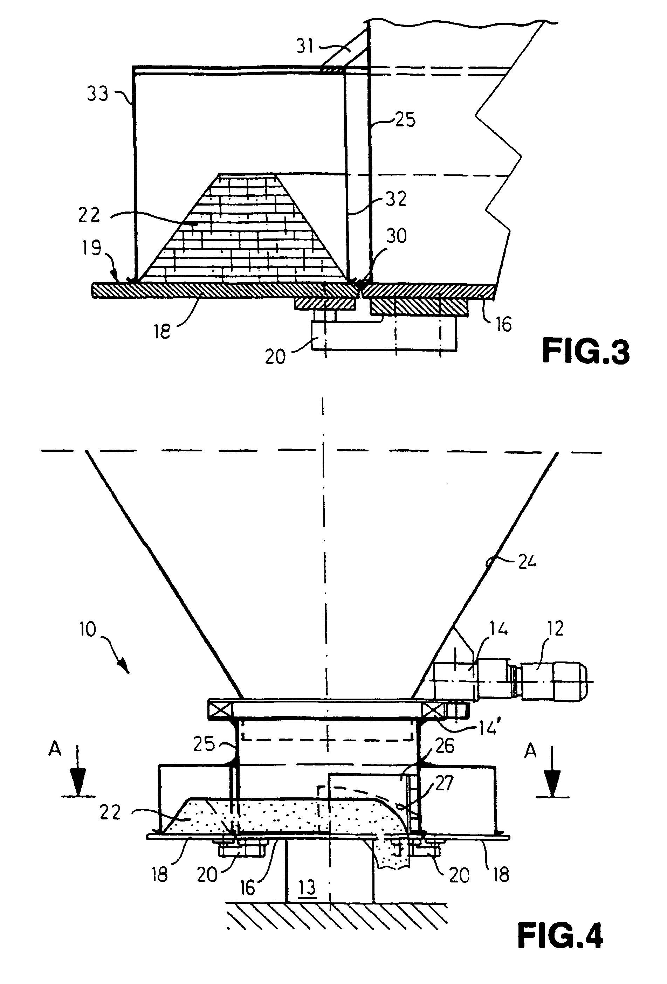

Die Fig. 1 und 2 zeigen eine erste Ausführungsform einer erfindungsgemäßen Dosiervorrichtung 10 mit einem hier in sechs Sektoren 18 unterteilten Meßtellerring 19 als Meßstrecke. Die Sektoren 18 stützen sich über Kraftmeßvorrichtungen bzw. Lastzellen 20 auf einem Teller 16 ab, der von einem Motor 12 über ein Getriebe 14 und eine vertikale Welle 15, mit einstellbarer bzw. geregelter Drehzahl angetrieben wird. Die Vorrichtung 10 ruht auf einer Basis 13, die ein Gestell oder Rahmengerüst sein kann.

Mittig über dem Teller 16 bzw. zentral zu dem Meßtellerring 19 öffnet sich ein Schacht 25, der von einem ortsfest angeordneten Bunker, Silo oder allgemein Behälter 24 mit fließfähigem Gut 22 beschickt wird. Hierdurch wird eine Beschickungsstation B gebildet. Radial außerhalb des Schachtes 25 ist, wie in Fig. 2 dargestellt, nach einer Meßstrecke M eine Entleerungsstation E in Form eines geraden oder gekrümmt ausgebildeten Abstreifers 26 stationär angeordnet, der das auf den Meßtellerring 19 aufgebrachte Gut 22 vom Meßtellerring 19 abstreift, so daß der Meßtellerring 19 geleert ist, bevor er wiederum zu einer in dem Schacht 25 vorgesehenen Umfangsöffnung 27 gelangt. Die Bildung eines gleichmäßigen Schüttgutstranges 22 wird dabei durch eine äußere und innere Begrenzung 33 und 32 gefördert, wobei sich die innere Begrenzung 32 anschließend an die etwa über einen Umfangswinkel von 90° geöffnete Umfangsöffnung 27 (1. Quadrant in Fig. 2) entlang dem 2. Quadranten in Fig. 2 erstreckt. Die äußere, erhöhte Begrenzung 33 (vgl. auch Fig. 3) erstreckt sich über den 1. und 2. Quadranten gemäß der Darstellung in Fig. 2, um somit das aus dem Schacht 25 im Laufe der Umlaufbewegung abgezogene Schüttgut zum Schüttgutstrang 22 auszubilden. Die so aus den Begrenzungswänden 32 und 33 gebildete Haube ist über Verankerungen 31 (vgl. Fig. 3) mit dem stationären Schacht 25 verbunden.

Wie insbesondere in Fig. 2 verdeutlicht, besteht der Meßtellerring 19 beim Ausführungsbeispiel aus mehreren, hier sechs gleichen Sektoren 18, die unabhängig voneinander, durch flexibel überbrückte Radialschlitze 28 getrennt, auf ihnen jeweils zugeordneten Lastzellen 20 aufgesetzt sind, so daß jeder Sektor 18 jeweils eine Art Plattformwaage bildet. Zum mittigen Teller 16 hin ist eine ähnliche flexible Überbrückung 30 am Innenrand der Sektoren 18 vorgesehen (vgl. Fig. 3).

In der ersten Phase des Dosiervorgangs läuft einer der Sektoren 18 entlang dem Außenrand bzw. der Umfangsöffnung 27 des Schachtes 25, so daß dieser Sektor 18 jeweils an der zentralen Beschickungsstation B infolge der Abzugsbewegung mit Schüttgut 22 beladen wird. Das Schüttgut 22 wird dabei mittels der Oberkante der Umfangsöffnung 27 in seiner Höhe als Schüttgutstrang vergleichmäßigt.

Unter Drehung des Meßtellerrings 19 (in Fig. 2: im Gegenuhrzeigersinn) erfolgt somit das weitere Beschicken des Meßtellerrings 19 kontinuierlich. Dann werden in dem vom unmittelbaren Be- und Entladevorgang entkoppelten Meßbereich M die unterhalb des Sektors 18 befindlichen Lastzellen 20 aktiviert und die Masse des auf dem jeweiligen Sektor 18 befindlichen Guts 22 bestimmt. Dabei ist zu beachten, daß praktisch eine statische Massebestimmung vorgenommen wird, da sich die Sektoren 18 jeweils über die Lastzellen 20 gegenüber dem Teller 16 abstützen, der unterhalb des Schachtes 25 umläuft und diesen zugleich nach unten hin begrenzt.

Im Fortgang des Massebestimmungsvorgangs gelangt jeder Sektor 18 nach weiterer Drehung in den die Entleerungsstation E bildenden Abwurfbereich (Fig. 2, unten), in dem das Gut 22 durch den Abstreifer 26 vom Meßtellerring 19 abgeworfen wird. Es ist zu erwähnen, daß das Abwerfen des Guts 22 von dem im Abwurfbereich befindlichen Sektor 18 keinen störenden Einfluß auf die Massebestimmung für den nachfolgenden, nun sich im Meßbereich M befindlichen Sektor 18 hat, da die Sektoren 18 über die Radialschlitze 28 bzw. die Überbrückung 30 voneinander entkoppelt sind.

Im weiteren Fortgang des Massebestimmungsvorgangs gelangt schließlich der jeweils geleerte Sektor 18 in den Bereich T (Fig. 2, rechts), in dem die unter ihm befindlichen Lastzellen 20 nochmals aktiviert werden und zwar zur Bestimmung des Leergewichtes (Tara) des dort befindlichen Sektors 18, der dann wieder in den Bereich der Umfangsöffnung 27 zur weiteren Beschickung bzw. Schüttgutabzug aus dem zentralen Schacht 25 einläuft (1. Quadrant im kartesischen Koordinatensystem gemäß Fig. 2).

Da in dem Bereich T (etwa 4. Quadrant) auch das Leergewicht jedes Sektors 18 laufend bestimmt wird, ist eine vollständige Entleerung nicht unbedingt erforderlich. Es kann sogar absichtlich eine gewisse Schicht unterhalb des Abstreifers 26 durchlaufen, so daß sich kein Abrieb auf der Oberfläche des Meßtellerrings 19 ergibt. Der Abstreifer 26 ist hierbei über ein Lenkergestänge an einem Auslegerarm 29 gelagert, der an dem stationären Schacht 25 befestigt ist.

In der vorstehenden Beschreibung wurden die vier Phasen an den Stationen B, M, E und T des Dosiervorgangs für einen einzelnen Sektor 18 beschrieben. Selbstverständlich ist der Vorgang kontinuierlich, wobei sich bei Drehung (im Gegenuhrzeigersinn gemäß Fig. 2) ein jeweils weiterer Sektor 18 in der jeweils nächsten Phase befindet. Es kann dabei auch eine andere Anzahl als sechs Sektoren 18 vorgesehen sein, z. B. vier oder acht derartiger Sektoren. Bei vollständiger Entleerung der Sektoren 18 an der Station E könnte auch auf die vierte Phase der Tara-Bestimmung verzichtet werden.

Die jeweilige Drehwinkelposition bzw. Winkelgeschwindigkeit des Meßtellerrings 19 wird durch bekannte Mittel festgestellt, beispielsweise durch jeweils den Sektoren 18 zugeordnete Sensoren (nicht dargestellt). Hierdurch läßt sich der Zeitpunkt bzw. Drehwinkel feststellen, in dem sich der Meßtellerring 19 in der in Fig. 2 gezeigten Position (und jeder weiteren um 90° verdrehten Position) befindet. Zu diesem Zeitpunkt wird dann der jeweils von den Lastzellen 20 aufgenommene Wert im Meßbereich M und im Tarabereich T festgestellt und unter Differenzbildung der zugeordneten Werte die tatsächliche durch jeweils einen Sektor 18 geförderte Masse bestimmt und aufsummiert bzw. integriert.

Soll somit eine bestimmte Masse gefördert werden, dann ergibt sich diese durch Akkumulierung oder Addition der festgestellten Massewerte. Bei einer kontinuierlichen gravimetrischen Dosierung werden die bestimmten Meßwerte für die einzelnen Sektoren 18 mit der Zeit bzw. der Drehzahl des Meßtellerrings 19 in Beziehung gesetzt. Hiervon kann dann ein Regelsignal für den Motor 12 abgeleitet werden, um einen Sollwert für den Durchsatz bzw. eine gewünschte Förderstärke einzuhalten.

Eine Vereinfachung der Berechnung kann dadurch erzielt werden, daß laufend ein Mittelwert für das Tara- oder Leergewicht bei T gebildet wird und dieser Mittelwert von den jeweiligen Messungen im Bereich M bzw. entsprechend vervielfacht von der Gesamtmasse bzw. -förderstärke abgezogen wird.

Fig. 4 veranschaulicht eine Abwandlung der erfindungsgemäßen Dosiervorrichtung 10, wobei im Unterschied zu Fig. 1 ein Antrieb der Dosiervorrichtung 10 von oben her vorgesehen ist, nämlich der Schacht 25 mit Abstreifer 26 und Umfangsöffnung 27 umläuft, während der Meßtellerring 19 über den hier stationären Teller 16 mit der Basis 13 verbunden ist. Das vom Motor 12 angetriebene Getriebe 14 wirkt hierbei auf einen Zahnkranz 14', der den Schacht 25 relativ zu den somit stationären Sektoren 18 rotieren läßt, wobei über die Umfangsöffnung 27 das vom Behälter 24 kommende Schüttgut als Strang 22 kontinuierlich auf den Sektoren 18 in Radialrichtung ausgebreitet wird. Diese Bauweise ermöglicht neben dem geringen Gesamtdurchmesser auch eine geringe Bauhöhe, so daß diese Dosiervorrichtung einfach in bestehende Gemengeanlagen oder dgl. integriert werden kann.

Als Lastzellen 20 können übliche Kraftmeßvorrichtungen zum Einsatz kommen, die eine Massebestimmung des auf den Sektoren 18 liegenden Schüttgutstranges 22 gestatten. So kann jeder Sektor 18 auf einer (oder mehreren) Scherkraftmeßzelle(n) abgestützt sein, so daß die Sektoren 18 über entsprechende Lastzellen 20 an dem Teller 16 angebracht sind.

Auf der Oberseite des Meßtellerrings 19 ist eine sich über alle Sektoren 18 durchgehend erstreckende Gummidecke oder ein entsprechend dünnes Stahlblech aufgebracht. Der innere Rand der Matte bzw. des Blechs ist am Teller 16 befestigt. Hierdurch ergibt sich eine äußerst einfache radiale Fixierung der Sektoren 18, ohne daß die vertikaler Beweglichkeit wesentlich beeinflußt wird. Die Sektoren 18 können so ohne besondere Maßnahmen auf der Kraftmeßvorrichtung 20 aufgesetzt sein.

Bezüglich der elektronischen Dosiersteuerung und Auswertung der erfindungsgemäßen Vorrichtung wird auf die eingangs genannten Druckschriften hingewiesen. Das dort beschriebene Prinzip ist bei der erfindungsgemäßen Dosiervorrichtung in entsprechender Weise anwendbar, wobei lediglich eine Drehwinkelerfassung zur aufeinanderfolgenden, intermittierenden Aktivierung der Kraftmeßvorrichtungen 20 (Fig. 1) beim jeweiligen Durchlauf durch die Meßstation M bzw. die Tara-Station T vorgesehen sein muß, insbesondere wenn der an der Tara-Station T für einen Sektor 18 festgestellte Tarawert von dem Bruttomeßwert abgezogen werden soll, der zuvor für den jeweiligen Sektor 18 an der Meßstation M gemessen wurde.

## Patentansprüche

1. Gravimetrische Dosiervorrichtung für Schüttgüter mit einer Beschickungsstation (B) zur Zuführung von Schüttgut, einer gegenüber der Beschickungsstation (B) versetzten Entleerungsstation (E) und Kraftmeßvorrichtungen (20) zur Bestimmung der Masse des jeweils über eine zwischen der Beschickungsstation (B) und der Entleerungsstation (E) in Sektoren (18) unterteilte Meßstrecke (M) geförderten Schütt-gutstrangs (22), wobei die Kraftmeßvorrichtungen (20) unterhalb der Sektoren (18) angeordnet sind,
**dadurch gekennzeichnet, daß**
die Meßstrecke (M) als Meßtellerring (19) ausgebildet ist, in dessen Zentrum die Beschickungsstation (B) mit einem Schacht (25), der eine Umfangsöffnung (27) zum Meßtellerring (19) hin aufweist, angeordnet ist.

2. Dosiervorrichtung nach Anspruch 1,
**dadurch gekennzeichnet, daß**
am Meßtellerring (19) zwischen Entleerungsstation (E) und Beschickungsstation (B) eine Tara- oder Sektorleergewichtsmeßstrecke (T) angeordnet ist.

3. Dosiervorrichtung nach Anspruch 1 oder 2,
**dadurch gekennzeichnet, daß**
an der Entleerungsstation (E) über dem Meßtellerring (19) ein Abstreifer (26) vorgesehen ist.

4. Dosiervorrichtung nach einem der vorhergehenden Ansprüche,
**dadurch gekennzeichnet, daß**
der Meßtellerring (19) mit einem Teller (16) verbunden ist, der von einem Motor (12) über eine Achse (15) umlaufend angetrieben wird und an dem über die Kraftmeßvorrichtungen (20) die einzelnen Sektoren (18) abgestützt sind.

5. Dosiervorrichtung nach Anspruch 1, 2 oder 3,
**dadurch gekennzeichnet, daß**
der Meßtellerring (19) ortsfest an einem stationären Teller (16) angeordnet ist und der Schacht (25) umlaufend angetrieben ist.

6. Dosiervorrichtung nach einem der vorhergehenden Ansprüche,
**dadurch gekennzeichnet, daß**
jeder Sektor (18) des Meßtellerrings (19) mit flexiblen Überbrückungen (30) vertikal beweglich an dem sich drehenden oder stationären Teller (16) befestigt ist.

7. Dosiervorrichtung nach einem der vorhergehenden Ansprüche,
**dadurch gekennzeichnet, daß**
eine unabhängige Vertikalbeweglichkeit der Sektoren (18) zueinander durch eine elastische Verbindung (28) zwischen ihnen gebildet wird oder der Meßtellerring (19) und dessen Sektoren (18) von einer Matte oder einem Blech bedeckt sind.

8. Dosiervorrichtung nach einem der vorhergehenden Ansprüche, **gekennzeichnet durch** eine den Meßtellerring (19) zumindest in der Beschickungsstation (B) nach außen hin umgebende Haube (32,33).

9. Dosiervorrichtung nach einem der vorhergehenden Ansprüche,
**dadurch gekennzeichnet, daß**
sich an die Beschickungsstation (B) eine radial innenliegende Begrenzungswand (32) anschließt.

10. Dosiervorrichtung nach einem der vorhergehenden Ansprüche,
**dadurch gekennzeichnet, daß**
an der Entleerungsstation (E) zur Abstützung des Abstreifers (26) ein an dem Schacht (25) befestigter Auslegerarm (29) angeordnet ist.

## Claims

1. A gravimetric dosing device für bulk materials, comprising a feeding station (B) to feed bulk material, an emptying station (E) offset in relation to the feeding station (B), and load-measuring devices (20) to determine the mass of the bulk material stream (22) respectively conveyed via a measuring section (M) divided into sectors (18) between the feeding station (B) and the emptying station (E), wherein the load-measuring devices (20) are arranged below the sectors (18),
**characterized in that**
the measuring section (M) is formed as a measuring plate ring (19), in the centre of which there is arranged the feeding station (B) including a shaft (25) having a peripheral opening (27) directed toward the measuring plate ring (19).

2. The dosing device of claim 1, **characterized in that** a tare or sector dead weight measuring section (T) is located at the measuring plate ring (19) between emptying station (E) and feeding station (B).

3. The dosing device of claim 1 or 2, **characterized in that** a stripper (26) is provided at the emptying station (E) above the measuring plate ring (19).

4. The dosing device of any of the preceding claims, **characterized in that** the measuring plate ring (19) is connected to a disk (16) which is rotated via a shaft (15) by a motor (12) and on which the individual sectors (18) are supported via the load-measuring devices (20).

5. The dosing device of claim 1, 2, or 3, **characterized in that** the measuring plate ring (19) is fixedly arranged on a stationary disk (16) and the shaft (25) is rotated.

6. The dosing device of any of the preceding claims, **characterized in that** each sector (18) of the measuring plate ring (19) is held vertically movable on the rotating or stationary disk (16) by means of flexible bridgings (30).

7. The dosing device of any of the preceding claims, **characterized in that** an independent vertical mobility of the sectors (18) with respect to each other is provided by a resilient connection (28) therebetween or **in that** the measuring plate ring (19) and the sectors (18) thereof are covered by a mat or a sheet metal.

8. The dosing device of any of the preceding claims, **characterized by** a hood (32, 33) surrounding the measuring plate ring (19) at least in the feeding station (B) toward the outside.

9. The dosing device of any of the preceding claims, **characterized in that** a radially inner limiting wall (32) is adjacent to the feeding station (B).

10. The dosing device of any of the preceding claims, **characterized in that** a delivery arm (29) fixed to the shaft (25) to support the stripper (26) is located at the emptying station (E).

## Revendications

1. Dispositif de dosage gravimétrique pour matériaux en vrac, comprenant un poste de chargement (B) pour amener des matériaux en vrac, un poste de vidage (E) décalé vis-à-vis dudit poste de chargement (B), et des dispositifs dynamométriques (20) pour déterminer la masse du boudin (22) de matériaux en vrac respectivement convoyé par l'intermédiaire d'un trajet de mesure (M) subdivisé en des secteurs (18) entre ledit poste de chargement (B) et ledit poste de vidage (B), les dispositifs dynamométriques (20) étant placés au-dessous des secteurs (18),
**caractérisé par le fait**
**que** le trajet de mesure (M) est réalisé sous la forme d'un anneau discoïdal de mesure (19) au centre duquel le poste de chargement (B) est disposé par un puits (25) muni d'une ouverture périphérique (27) dirigée vers ledit anneau discoïdal de mesure (19).

2. Dispositif de dosage selon la revendication 1,
**caractérisé par le fait**
**qu'**un trajet (T) mesureur de tares ou de poids à vide des secteurs est interposé, sur l'anneau discoïdal de mesure (19), entre le poste de vidage (B) et le poste de chargement (B).

3. Dispositif de dosage selon la revendication 1 ou 2,
**caractérisé par le fait**
**qu'**un racleur (27) est prévu, au poste de vidage (E), au-dessus de l'anneau discoïdal de mesure (19).

4. Dispositif de dosage selon l'une des revendications précédentes,
**caractérisé par le fait**
**que** l'anneau discoïdal de mesure (19) est relié à un plateau (16) qui est mené en révolution par un moteur (12), par l'intermédiaire d'un axe (15), et sur lequel les secteurs individuels (18) prennent appui par l'intermédiaire des dispositifs dynamométriques (20).

5. Dispositif de dosage selon la revendication 1, 2 ou 3,
**caractérisé par le fait**
**que** l'anneau discoïdal de mesure (19) est monté fixe sur un plateau stationnaire (16), et le puits (25) est mené en révolution.

6. Dispositif de dosage selon l'une des revendications précédentes,
**caractérisé par le fait**
**que** chaque secteur (18) de l'anneau discoïdal de mesure (19) est fixé avec mobilité verticale, par l'intermédiaire d'entretoisements flexibles (30), au plateau (16) tournant ou stationnaire.

7. Dispositif de dosage selon l'une des revendications précédentes,
**caractérisé par le fait**
**qu'**une mobilité verticale indépendante des secteurs (18), les uns par rapport aux autres, est matérialisée par une liaison élastique (28) établie entre eux ; ou l'anneau discoïdal de mesure (19), et les secteurs (18) de ce dernier, sont recouverts d'un capiton ou d'une tôle.

8. Dispositif de dosage selon l'une des revendications précédentes, **caractérisé par** un carénage (32, 33) entourant l'anneau discoïdal de mesure (19) vers l'extérieur, au moins dans le poste de chargement (B).

9. Dispositif do dosage selon l'une des revendications précédentes,
**caractérisé par le fait**
**qu'**une paroi de délimitation (32), occupant une position radialement intérieure, se rattache au poste de chargement (B).

10. Dispositif de dosage selon l'une des revendications précédentes,
**caractérisé par le fait**
**qu'**un bras (29) en porte-à-faux, fixé au puits (25), est installé sur le poste de vidage (E) pour conférer un appui au racleur (26).
